# EUROPEAN PATENT APPLICATION

(11) **EP 3 150 502 A1**
(43) Date of publication of application: **05.04.2017**
(21) Application number: 15800664.3
(22) Date of filing: 29.05.2015
(51) Int. Cl.: B65D 3/28, B05D 1/10, B05D 7/00

(54) **SHAPED PAPER ARTICLE, LOCALIZED-REGION COATING METHOD, AND COATING DEVICE**

(30) Priority: 30.05.2014 JP 2014112615; 30.05.2014 JP 2014112616; 30.05.2014 JP 2014112617
(71) Applicant: Toyo Seikan Group Holdings, Ltd., Shinagawa-ku Tokyo 141-8627 (JP)
(72) Inventor: KUNIHIRO Ichiro, Yokohama-shi Kanagawa 240-0062 (JP)
(74) Representative: dompatent von Kreisler Selting Werner - Partnerschaft von Patent- und Rechtsanwälten mbB
(86) International application number: PCT/JP2015/065631
(87) International publication number: WO 2015/182760

(57) **Abstract**

A raised resin portion 8, 9 is formed by thermally spraying a powdered resin on a local portion such as a bonding step portion of a cup-shaped formed paper article 1 to improve sealing performance of the formed paper article and form a resin coating layer 60 including a scorching-preventing substance on a local region where scorching tends to occur during heating in a microwave oven. The raised resin portion is formed on the local region by intermittently discharging the resin powder from a tank with a shutter device and repeatedly thermally spraying the resin powder on the local region with a pressurized gas.

## Description

### TECHNICAL FIELD

The present invention relates to a formed paper article such as a cup-shaped formed paper container, and a local region coating method and coating device suitable for coating with a coating material a local region of the formed paper article.

### BACKGROUND ART

In typical cup-shaped formed paper articles such as formed paper articles for eating and drinking, there is a step created by bonding of two blank edges in an opening curled portion, a bonding portion is also present at a body, and paper ends are exposed on the cup inside and outside at the two edges of the bonding portion.

Where such a cup-shaped formed paper article is filled with contents and sealed, a lid is heat-sealed to the upper surface of the curled portion. Further, where the contents is to be consumed immediately after filling, for example, when the article is sold in a store, the article is sold with an overcap fitted on and engaged therewith. When the lid is heat-sealed, the curled portion is usually crushed in a flat shape and flanged to increase the adhesion area in order to prevent defects in thermal adhesion of the lid. Such cup-shaped formed paper articles have been used as containers for direct drinking, but where a step portion is present at the opening end, it is uncomfortable for the lips, and the flange which has been crushed in a flat shape is itself uncomfortable for the lips. Another problem is that since the paper edges are exposed inside and outside the formed article at the bonding position of the body, in particular, the paper edge positioned on the inside is in direct contact with the liquid contents, absorbs moisture, and degrades water resistance of the container. Yet another problem encountered in the case of drawn paper articles is that since wrinkles are generated on the flange portion of the opening peripheral edge, the sealing performance is difficult to ensure when the lid is sealed to the flange surface.

As a method for resolving the problems inherent to formed paper articles which are formed by bonding a blank, it has been suggested to provide an edge extension piece composed of a thermoplastic resin layer laminated on a base material sheet at two opposing edges of the blank, bond two end portions such that one edge extension piece comes to the inner side and the other edge extension piece comes to the outer side of the formed paper article so that the paper portions of the base material sheet do not overlap, and bond the edge extension pieces by thermocompression (see Patent Literature 1). Another suggested method involves scraping the side edge on the inner side to make it thinner toward the end side and bonding the side edge on the outer side thereto to form a body bonding portion and a curl bonding portion, thereby reducing in size the step in the bonding portion (see Patent Literature 2). In yet another suggested method, a resin reinforcing ring which has been molded separately is welded to the opening to eliminate a step in the curled portion of the opening and improve the sealing performance and comfort for the lips (see Patent Literature 3).

Meanwhile, in recent years, formed paper containers mainly composed of paper materials as recycling resources have attracted attention from the standpoint of environmental load, and a demand has been created for microwavable formed paper containers that have improved sealing performance, can hold contents such as soups, beverages, and solid matter, and can be heated in a microwave oven. However, where a formed paper container having a blank bonding portion is heated in a microwave oven, microwaves tend to concentrate in the bonding portion and scorching tends to occur in this part. In particular, a problem associated with a cup-shaped formed paper container having an annular leg portion is that scorching tends to occur on the inner peripheral surface of the annular leg portion.

Accordingly, formed paper containers configured to prevent the occurrence of scorching during heating in a microwave oven have heretofore been suggested (see, for example, Patent Literature 4 and 5). However, the problems associated with the two conventional cup-shaped formed paper containers are that the bottom shape thereof is changed, the containers also have a complex structure, new production equipment is needed to replace the conventional production line, and the cost is increased.

Meanwhile, a method for coating a molten resin by discharging with a hot melt gun or a hot liner has been generally used as a means for locally coating the resin on an object such as the conventional formed paper containers, but since the resin stringing phenomenon occurs after the discharge from the nozzle, accurate coating on narrow regions are difficult to implement, the resin is wasted, and cycle-up is difficult. Wet methods such as resin solution coating or emulsion coating are also known, but problems associated with these methods include a limited number of materials suitable therefor, the necessity to vaporize a solvent after the coating, and a high environmental load created by the solvent. A method has also been suggested by which a molten resin obtained by extruding and melting a resin starting material with a screw under heating, in the same manner as in an injection molding machine, is sprayed in the form of fine particles on the surface of an object such as a metal to form a coating (see Patent Literature 6). Although such a device is suitable for coating a resin on the surface of a large object, the resin is difficult to spray intermittently and accurately in very small amounts. For example, such a device is difficult to apply to forming a small raised resin portion on a step portion on an opening curled portion of a paper cup or the like. Other problems are that the device is difficult to reduce in size and increase in speed and the equipment cost is high.

In yet another known method, an adhesive resin powder is coated on an object surface with a thermal spraying gun by flame spraying that uses flame obtained with acetylene, propane, and the like (see Patent Literature 7). However, in this case, the intermittent processing and spray pattern control are difficult, thermal spray coating is difficult to perform reliably on narrow regions, and the object or the coating resin itself can be thermally degraded by the flame.

Thus, it can be said that an accurate and efficient technique for intermittently and locally forming a resin coating on a narrow region has not yet been established with respect to products that are conveyed on a conveyor line and produced industrially on a large scale.

### PRIOR ART LITERATURE

### Patent Literature

Patent Literature 1: Japanese Patent Application Publication No. 2005-14975
Patent Literature 2: Japanese Patent Application Publication No. 2003-191941
Patent Literature 3: Japanese Patent Application Publication No. 2002-264918
Patent Literature 4: Japanese Patent Application Publication No. 2003-95352
Patent Literature 5: Japanese Patent Application Publication No. 2005-88955
Patent Literature 6: Japanese Patent Application Publication No. H09-201833
Patent Literature 7: Japanese Patent Application Publication No. S63-141666

### SUMMARY OF THE INVENTION

### Problems to be solved by the Invention

The problems arising when the bonding end portion is formed of edge extension pieces composed of a thermoplastic resin, or the thickness of the paper edge is decreased to reduce the bonding step in size, as described in Patent Literature 1 and 2, in the conventional formed paper articles are that processing is difficult and unstable and the manufacturing process becomes complex. Further, the speed and efficiency of the manufacturing process are difficult to increase. Where an opening reinforcing resin ring is fused, as a separate member, to a formed paper article, the material cost is increased and processes of molding and welding a resin ring are required separately. Hence, problems such as an increase in production costs arise.

Further, it can be said that an accurate and efficient technique for intermittently and locally forming a resin coating mainly composed of a synthetic resin on a narrow region of a formed paper article has not yet been established with respect to formed paper articles that are conveyed on a conveyor line and produced industrially on a large scale.

Accordingly, it is an objective of the present invention to provide a formed paper article which can resolve the above-described problems of formed paper articles in a simple manner and without a complex process and in which the problems associated with sealing performance, bonding portion, and the occurrence of wrinkles in formed paper articles having an opening are resolved, and also to provide a local region resin coating method and a device therefor that enable accurate and efficient resin coating even on a narrow region of the formed paper article and also enable intermittent and repeated resin coating.

### Means for Solving the Problems

The formed paper article of the present invention that resolves the abovementioned problems is a formed paper article having an opening, wherein a raised resin portion is molded on a local portion by thermally spraying a coating material configured of a powder mainly composed of a synthetic resin.

The formed paper article of the present invention can be configured such that the local portion is at least a bonding step portion of a peripheral edge of the opening of a cup-shaped formed paper article, and the raised resin portion is formed on the step portion to bury the step portion.

The configuration can be also such that where the local portion is a bonding step portion of the body of the formed paper article, a paper edge in the bonding portion is coated with resin by forming a raised resin portion on the step portion.

The configuration can be also such that where the formed paper container is a drawn article mainly composed of paper, wrinkles on an opening flange surface are coated by forming the raised resin portion on an entire periphery of the opening flange surface.

The configuration can be also such that the raised resin portion is molded by thermally spraying a heat-adhesive resin powder and has a coating thickness of 0.3 mm or less.

Where the formed paper container of the present invention is adapted to heating in a microwave oven, the occurrence of scorching during microwave heating can be prevented by forming a resin coating layer including a scorching-preventing substance on a local region of the paper container.

In the case of a cup-shaped formed paper container, the local region is an inner peripheral surface of an annular leg portion where scorching tends to occur during heating in a microwave oven.

By forming the resin coating layer by thermally spraying a powder in which a scorching-preventing substance powder is mixed with a resin powder, it is possible to form the coating layer effectively with a small amount of a coating material at a predetermined position.

The type of the resin powder is not limited, and a polyolefin resin powder such as polyethylene and polypropylene or a polyester resin powder such as PET, PEN, PLA, and PBT with a particle diameter of 30 µm to 300 µm can be effectively used.

Meanwhile, calcium carbonate or talc, which is an inexpensive substance with a low dielectric constant, can be used as the scorching-preventing substance powder.

The local region resin coating method of the present invention that resolves the abovementioned problems is a coating method for coating a local region of an object with a coating material mainly composed of a synthetic resin, wherein a powder mainly composed of the synthetic resin is intermittently thermally sprayed on the local region.

Where the powder is quantitatively discharged, pumped with a pressurized gas, merged with a heating gas and intermittently thermally sprayed on the local region, quantitative resin coating of the object can be performed repeatedly by small amounts.

The heating is preferably such that the powder is heated by hot air close to a melting point of the synthetic resin and partially melted. Where the local region of the object which is to be coated is preheated, the resin powder is not sprayed in a completely molten state, and the sprayed resin powder is completely melted on the object surface to coat the object surface. Therefore, the stringing phenomenon does not occur, cycle-up of intermittent thermal spraying is enabled, and coating efficiency can be increased.

The local region resin coating device of the present invention that resolves the abovementioned problems is a coating device for coating with a coating material mainly composed of a synthetic resin, the coating material being a powder and the coating device including a tank for supplying the powder, a thermal spray nozzle communicating with a lower end of the tank, and a quantitative discharge shutter device provided between a lower end opening of the tank and the thermal spray nozzle, wherein the powder is quantitatively discharged from the tank by the quantitative discharge shutter device, merged with a heating gas, and thermally sprayed from the thermal spray nozzle.

A configuration can be used in which the quantitative discharge shutter device is composed of a rotating body provided across an outlet opening of the tank, a metering chamber facing the outlet opening of the tank is provided in the rotating body, a valve is provided that communicates with a gas supply port of the metering chamber and supplies a pressurized gas to the metering chamber, the rotating body can be rotated intermittently between a metering position and a thermal spraying position, at the metering position, the powder is quantitatively metered facing the outlet opening of the tank, at the spraying position, the metering chamber faces the thermal spray nozzle, the pressurized gas is supplied from the valve to the metering chamber, and the powder is pumped into the thermal spray nozzle.

### Advantageous Effects of the Invention

According to the present invention, as a result of simply forming a raised resin portion locally on a formed paper article, the problems associated with the bonding portion and the occurrence of wrinkles in formed paper articles having an opening are resolved easily and at a low cost, without subjecting the base blank material to special processing, and a formed paper product with excellent sealing performance can be obtained.

Further, as a result of applying the present invention to the bonding step portion on the opening peripheral edge of a cup-shaped formed paper article and forming a small raised resin portion on the step portion, it is possible to improve comfort for the lips when drinking the contents directly from the container, improve sealing capability at the step portion when heat-sealing the lid and improve the sealing performance. Furthermore, applicability of the formed paper article to sealed containers in which the contents can be stored at a normal temperature can be increased. In addition, leak from the step portion can be effectively prevented when the container is covered with an overcap and sealed.

The present invention can be also applied to an exposed paper edge such as the bonding portion of a formed paper article, thereby making it possible to coat the exposed paper edge effectively with a resin, prevent moisture absorption from the contents, or the like, from the exposed paper edge, and improve water resistance.

Further, by applying the present invention to an opening flange surface of a drawn article mainly composed of paper, it is possible to cover the wrinkles on the flange, increase thermal welding ability of the heat-seal lid, and improve sealing performance.

With the configuration such that the raised resin portion is formed by thermally spraying a heat-adhesive resin powder and has an average coating thickness of 0.3 mm or less, the raised resin portion can be formed efficiently from a small amount of a resin material and without stringing.

When the formed paper container of the present invention is adapted to heating in a microwave oven, as a result of forming a resin coating layer including a scorching-preventing substance on the local region thereof, the occurrence of scorching during microwave heating can be easily prevented by a simple means, without changing the basic structure of the conventional formed paper container.

In the case of a cup-shaped formed paper container, by only forming a resin coating layer including a scorching-preventing substance on the inner peripheral surface of an annular leg portion, it is possible to prevent easily the occurrence of scorching, without changing the bottom shape of the conventional cup-shaped formed container.

Further, as a result of forming the resin coating layer by thermally spraying a powder in which a scorching-preventing powder is mixed with a plastic powder, the scorching-preventing layer can be formed reliably and inexpensively on the inner peripheral surface of the annular leg portion. By using an inorganic substance with a relative dielectric constant of 2 or less as the scorching-preventing substance powder, it is possible to form the scorching preventing layer effectively.

With the coating method of the present invention, by intermittently thermally spraying a powder mainly composed of a synthetic resin on a local region, it is possible to coat the resin accurately and efficiently even on a small area.

Since the powder mainly composed of a synthetic resin is discharged quantitatively and intermittently and thermally sprayed, a material with a small particle diameter and a high welding efficiency can be thermally sprayed on a small area, resin coating can be performed efficiently by using a minimum amount of material, and high cycling is made possible.

Further, with thermal fusion, since the synthetic resin powder is heated by hot air close to the melting point thereof and partially melted, the powder melts after adhesion to the object. Therefore, the resin stringing phenomenon is eliminated and high-speed intermittent spraying can be accurately performed.

As a result of preheating the local region of the object which is to be coated with the resin, the resin powder which is thermally sprayed in a state of being heated close to the melting point thereof and partially melted can be efficiently welded to the local region.

Further, by applying the coating method of the present invention to the bonding step portion on the opening curled portion of a container having an opening, a small raised resin portion can be formed on the step portion, comfort for the lips can be improved when drinking the contents directly from the container, and sealing capability at the step portion when heat-sealing the lid can be improved. Further, leak from the step portion can be effectively prevented when the container is covered with an overcap and sealed.

By applying the coating method of the present invention to an exposed paper edge such as the overlapping portion of a formed paper container, it is possible to coat the exposed paper edge effectively with a resin, prevent moisture absorption from the contents, or the like, from the exposed paper edge, and improve water resistance.

Further, by applying coating method of the present invention to a formed paper article of a low rigidity, it is possible to add local increase in thickness as reinforcement and increase the rigidity and shape retaining ability of the formed article.

Furthermore, for example, by mixing a powder of an inorganic substance, or the like, with the powdered resin and applying the coating method of the present invention to a location where scorching tends to occur when a paper container is heated in a microwave oven, the location can be modified such that scorching is unlikely to occur.

The coating device of the present invention has a simple configuration, can be reduced in size, can be easily and inexpensively incorporated in the usual production line, enables accurate and intermittent thermal spraying of a small amount of a powdered resin even when the thermal spraying region has a small area, and makes it possible to reduce the amount of material used.

Further, as a result of providing the coating device of the present invention with the quantitative discharge shutter device, it is possible to perform accurate metering with a simple mechanism even with small amounts of the powdered resin, and also intermittently and at a high speed. As a consequence, a powder with a small particle diameter that has poor sliding ability can be also used.

Further, by using a heating gas as hot air, thermal spraying can be performed without using a flame, and thermal effects on the object and the coating resin itself can be mitigated.

### BRIEF DESCRIPTION OF THE DRAWINGS

Fig. 1 shows a perspective view and partial cross-sectional views of the formed paper container according to an embodiment of the present invention.
Fig. 2 shows a perspective view of the formed paper container according to another embodiment of the present invention.
Fig. 3 shows schematic view illustrating the principal part of the coating device and the coating method according to an embodiment of the present invention.
Fig. 4 shows schematic views illustrating how the metering chamber is compression filled with the powder in the device depicted in Fig. 3.
Fig. 5 shows photos illustrating the raised resin portion formed on a laminated source paper of Example 1 of the present invention.
Fig. 6 shows photos of the cross section and top surface of the step portion after a raised resin portion has been formed on the step portion in Example 2 of the present invention.
Fig. 7 illustrates a preheating process and a thermal spraying process of the coating method according to an embodiment of the present invention.

### EXPLANATION OF REFERENCE NUMERALS

- 1: cup-shaped container
- 2: body
- 3: opening curled portion
- 4: step portion
- 5: body bonding portion
- 6: paper edge
- 7: annular leg portion
- 8, 9, 13: raised resin portions
- 10: drawn container
- 12: flange surface
- 14: wrinkles
- 25: preheating nozzle
- 30: coating device
- 31: tank
- 32: thermal spray nozzle
- 33: lower end opening
- 34: powder supply device
- 35: quantitative discharge shutter device
- 36: rotating body
- 37: metering chamber
- 38: gas supply port
- 40: hot air generator
- 42: flow channel

- 43: supply conduit
- 44: electromagnetic valve
- 45: introducing flow channel
- 46: spraying flow channel
- 52: folded piece
- 57: bottom plate
- 58: annular curved portion
- 60: layer of resin mixed with inorganic substance
- 70: trial laminate source paper
- 71: raised resin portion

### MODES FOR CARRYING OUT THE INVENTION

An embodiment of the formed paper container according to the present invention will be explained hereinbelow in greater detail with reference to the drawings.

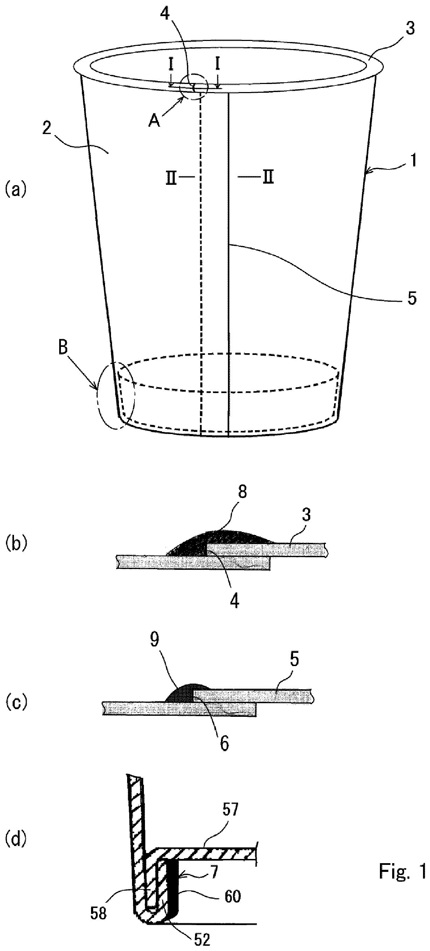

Fig. 1 illustrates a cup-shaped container as a formed paper body according to an embodiment of the present invention. In the cup-shaped container 1, a conical shape is molded by adhesively bonding both edges of a fan-shaped blank serving as a body 2, the upper end portion of the conical shape is curled to form an opening end portion, an annular leg portion 7 is obtained by folding a step surface at a lower end B inward, as depicted in (d) in Fig. 1, to form a folded piece 52 and crimping an annular curved portion 58 of a bottom plate 57, which has been drawn to have a U-shaped cross section, between the lower end and the folded piece, and a step portion 4 produced by bonding the two edges of the blank is made, as shown on an enlarged scale in (b) in Fig. 1, in a portion A of the opening curled portion 3. Further, a bonding portion 5 is formed in the body, and the paper ends are exposed on the inside and outside of the cup at both edges of the bonding portion. The above-described structure is the same as that of the conventional well-known cup-shaped formed paper container.

In order to prevent the above-described sealing defects caused by the step portion 4 in the opening curled portion 3 at the opening peripheral edge of such a cup-shaped formed paper container and avoid discomfort for the lips when the container is used as a direct drinking container, in the present invention, a raised resin portion 8 was formed by thermally spraying a small amount of a synthetic resin on the step portion and the step was buried in the resin.

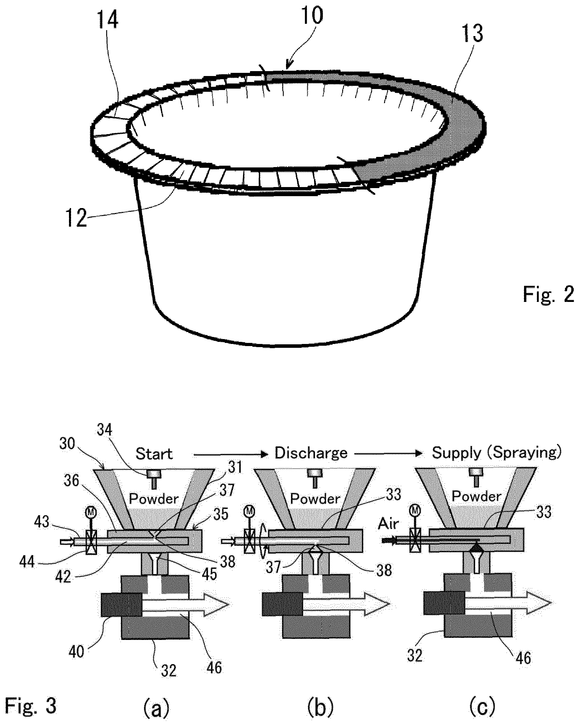

A raised resin portion is difficult to form with precision on a narrow region such as the step portion 4 of the curled portion of the cup-shaped formed paper container, but in the present embodiment, the raised resin portion could be satisfactorily formed on the step portion 4 of the curled portion by intermittently thermally spraying a powdered resin with a resin thermal spraying device shown schematically in Fig. 3, and the aforementioned problems could be resolved by a simple method, without special processing of the source paper edges themselves.

Further, in the present embodiment, as shown on an enlarged scale in (c) in Fig. 1, the paper edge 6 exposed on the inner surface side was coated with a resin by forming a continuous raised resin portion 9 in the vertical direction along the paper edge 6, in particular on the inner surface side of the cup, of the body bonding portion 5 in the formed paper container. As a result, the paper edge 6 was prevented form coming into direct contact with liquid contents and moisture resistance of the container could be increased. Further, in the present embodiment, the resin was coated only on the paper edge on the inner side of the bonding portion, but it is preferred that the outer side be likewise also coated with the resin.

Where such a formed paper container is to be adapted to heating in a microwave oven, both the body blank material and the bottom material are mainly composed of paper, but the inner and outer surface are laminated or coated with a polyolefin resin, a polyester resin, etc. for protection from liquid contents, or an impregnated composite paper material or a multilayer material optionally having a gas barrier layer as the inner layer can be used. The materials to be used are not particularly limited, provided that they can be heated in a microwave oven.

In the cup-shaped container described hereinabove, in the present embodiment, a resin coating layer 60 including a scorching-preventing substance was formed, as depicted in (d) in Fig. 1, on the entire periphery of the inner peripheral surface of the annular leg portion 7 where scorching tends to occur during heating in a microwave oven, and the occurrence of scorching during heating in a microwave oven was prevented. In the present embodiment, the resin coating layer 60 was formed on the inner peripheral surface of the annular leg portion 7 by thermally spraying a powder with a particle diameter of 30 µm to 300 µm in which a synthetic resin powder was mixed with the scorching-preventing substance powder.

The powders that can be used in the present invention include, but are not limited to, materials which are easily adhesive to formed paper containers mainly composed of paper. In a typical formed paper container, a paper base material serving as a base is coated with a resin, and in order to ensure easy adhesion, it is preferred that a resin of the same type as the surface resin layer, or a resin with a melting point lower than that of the surface resin layer be used.

Here, the synthetic resin is not particularly limited, provided it is a thermoplastic resin, and a single resin powder or a plurality of resin powders selected from polyolefins such as high-medium-low-density polyethylene and polypropylene and polyesters such as PET, PEN, PLA, and PBT can be used. Further, for example, calcium carbonate and talc, which are substances with a low relative dielectric constant, can be used as the scorching-preventing substance. As a result generation of heat caused by absorption of microwaves in the annular leg portion can be reduced and the occurrence of scorching can be prevented.

Methods using hot melting, a hot runner, flame thermal spraying, etc., can be considered for forming a resin coating layer including a scorching-preventing substance on the local region. However, when any of the above-mentioned methods is used to form the resin coating layer on a very narrow coating region by using a small amount of resin on a high-speed container production line, as in the present embodiment, a coating resin stringing phenomenon occur, a restriction is placed on cycle-up, and accurate coating is difficult to perform. To overcome this problem, in the present embodiment, a preheating process and a resin thermal spraying process were provided for post-processing a cup-shaped container which was formed and conveyed in a production line, hot air was blown onto the resin coating region in the preheating process to preheat the inner peripheral surface of the annular leg portion close to the melting point of the coating resin, and then the resin powder was thermally sprayed on this portion in the resin thermal spraying process. As mentioned hereinabove, thermal spraying of the resin powder can be performed by using, as a starting material, a powdered resin powder with a particle diameter of 30 µm to 300 µm in which a synthetic resin powder is mixed with a scorching-preventing substance powder, and intermittently or continuously thermally spraying the starting material on the inner peripheral surface of the annular leg portion with a thermal spray nozzle by using a pressurized heating gas (in the present embodiment, the hot air) heated to or below the melting temperature of the resin, thereby forming a raised resin portion.

By coating the resin on the inner peripheral surface of the annular leg portion by the above-described method, it is possible to coat the resin with precision on a predetermined small region without the occurrence of the stringing phenomenon, and the amount of the material used can be minimized.

Fig. 2 illustrates another embodiment of the present invention. In the present embodiment, a raised resin portion 13 was formed on a flange surface 12 of a drawn container 10 on the entire periphery of the flange so as to cover wrinkles 14 on the flange surface which appeared in the drawing process (in Fig. 2, the raised resin portion is formed on half of the flange surface), and when a lid was heat-sealed, the resin fused and buried the wrinkles, the lid was perfectly fused, and the sealing performance was improved.

As mentioned hereinabove, when a small raised resin portion is formed on a local narrow region of a formed paper container, stringing of the resin occurs, the raised resin portion is difficult to form efficiently and over a short period of time only in the predetermined location, and the resin is wasted. However, in the present embodiment, by intermittently thermally spraying a powdered resin by using the below-described resin coating device, it was possible to coat the resin with precision on the predetermined small region, without the occurrence of the stringing phenomenon, and the amount of the material used could be minimized.

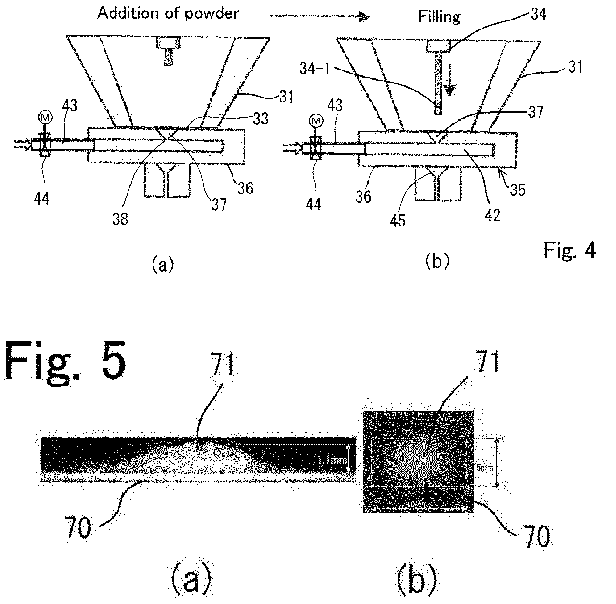

Embodiments of the coating method and coating device of the present invention that make it possible to form accurately a small raised resin portion locally on the formed paper container will be described hereinbelow in detail with reference to Fig. 3 and Fig. 4.

As a method of the present invention that enables high-speed reliable resin coating, without the occurrence of the stringing phenomenon or the like, with a small amount of resin on a small region of an object, in the present invention, a powder mainly composed of a synthetic resin was quantitatively discharged, heated close to the melting point of the synthetic resin, and intermittently and repeatedly thermally sprayed on the local region. A resin material and a particle diameter thereof are selected for the synthetic resin powder according to the application and target of the location to be coated with the synthetic resin. For example, when thermal spraying is performed to form a raised resin portion on the opening curled portion of the cup, a heat-sealable resin powder such as polyethylene is used in order to eliminate the step portion, improve comfort for the lips, heat seal with the lid, and improve the sealing performance.

Fig. 3 illustrates schematically the principal part of a resin coating device 30 according to the present embodiment which serves for thermally spraying a powdered resin on a local region. In the device, a thermal spray nozzle 32 is provided at a lower end opening 33 of a hopper-shaped tank 31, with a quantitative discharge shutter device 35 being interposed between the nozzle and the opening. A powder supply device 34 for supplying a powder mainly composed of a resin to the tank is linked to the tank 31. Further, if necessary, a heating means can be also provided for heating the supplied powdered resin to a predetermined temperature. A hot air generating device 40 is preferred as the heating means.

The quantitative discharge shutter device 35 is composed of a rotating body 36 provided across the lower end opening 33 of the tank 31, and a metering chamber 37 facing the lower end opening 33 of the tank 31 is provided in the rotating body 36, the metering chamber being in the form of a conical recess such that the top portion thereof reaches the substantially central axis of the rotating body 36. One end of the rotating body 36 is linked to an intermittent rotary drive means (not depicted in the figure). The rotating body has a flow channel 42 along the central axis thereof, the flow channel being connected at one end to a pressurized gas source and communicating with a pressurized gas supply port 38 formed in the top portion of the metering chamber 37. A supply conduit 43 linked to a compressed air supply source such as a compressor is linked to the flow channel 42, and the delivery timing of the pressurized gas into the metering chamber 37 is controlled by an electromagnetic valve 44 provided in the supply conduit. The rotating body 36 is half-turned intermittently and controlled such that the metering chamber is alternately positioned at a powder metering position and a position of pumping to the thermal spray nozzle.

A heating gas is supplied as a heating means to the thermal spray nozzle 32. Hot air is preferred as the heating gas, and the hot air is supplied by a hot air generator 40, which is linked to the air supply source such as a compressor, to the thermal spray nozzle as a heating gas heated to a predetermined temperature by a heating means such as electrical heating or gas combustion.

The thermal spray nozzle 32 has at the top portion thereof an introducing flow channel 45 capable of receiving the powdered resin from the metering chamber 37 when the rotating body 36 is rotated to the thermal spraying position, and a spraying flow channel 46 with a predetermined port diameter is formed below the introducing flow channel. The heating gas is supplied to the spraying flow channel 46, and the heating gas merges with the powder pumped from the metering chamber. Naturally, the rotating body 36 is rotatably linked in a sealed state such that the powder does not leak to the outside between the tank 31, the quantitative discharge shutter device 35, and the thermal spray nozzle 32.

The device for coating a powdered resin of the present invention has the above-described configuration and forms a resin coating by thermally spraying the powdered resin in the below-described manner on the local region of an object.

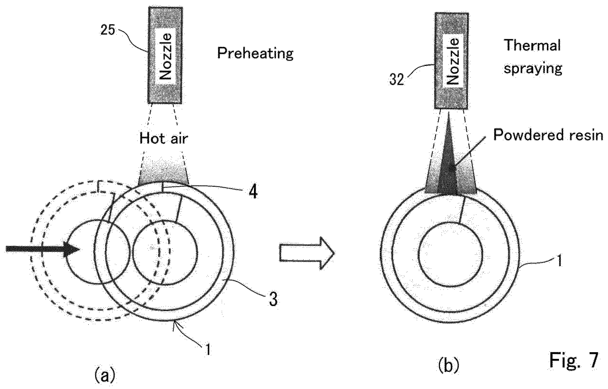

Initially, the region of the object which is planned to be coated with the resin is preheated. A method for preheating is not particularly limited, and a variety of heating methods can be used, but a method for blowing hot air from a preheating nozzle 25, such as illustrated by (a) in Fig. 7, is preferred since heating can be performed locally in a simple manner with an inexpensive equipment. The preheating can be also performed by using hot air from the thermal spray nozzle and delaying the spraying of the resin. As a result of preheating the thermal spraying target surface, the resin can be satisfactorily welded to the object surface even when the resin sprayed from the thermal spray nozzle is not completely melted, and the resin coating can be formed intermittently and at a high speed.

The preheated local region of the object is then coated with the resin by thermally spraying the powdered resin with the abovementioned coating device. In thermal spraying of the powdered resin with the device, the powdered resin is supplied into the tank 31 in the state depicted in (a) in Fig. 3, and in this state, the powdered resin of a volume equal to that of the metering chamber is automatically loaded into the metering chamber 37 of the quantitative discharge shutter device 35. The rotating body 36 is then rotated through 180°. As a result, as depicted in (b) in Fig. 3, the metering chamber 37 is inverted to face the introducing flow channel 45 of the thermal spray nozzle 32. At the same time, the valve 44 is opened, the pressurized gas is blown through the pressurized gas supply port 38 into the inverted metering chamber, the metered amount of the resin powder in the metering chamber is merged with the heating gas flowing through the spraying flow channel 46 of the thermal spray nozzle and thermally sprayed on the local region of the object ((c) in Fig. 3). Thus, in the present embodiment, as a result of repeating the abovementioned operations and intermittently thermally spraying a small amount of the powdered resin a plurality of times on the same zone, for example, after the object has been stopped, it is possible to form reliably a raised portion including a predetermined amount of resin in a very narrow range. With the method of the present invention, since the resin is thermally sprayed intermittently in small amounts, the thermally sprayed resin is in a partially melted state and can be melted on the object surface and fused thereto, and fusion defects can be prevented. Further, the surface of the formed raised resin portion can be made smoother by reheating.

When the particle diameter of the resin powder is small and the resin powder has poor sliding ability, a nozzle 34-1 of the powder resin supply device 34 provided inside the tank is extended close to the top of the metering chamber, as depicted in (b) in Fig. 4, to perform compression loading of the powder such that the inside of the metering chamber 37 is completely filled with the resin.

### EXAMPLES

### Example 1: (Formation of raised resin portion on laminated source paper)

As depicted in Fig. 5, a powdered resin was thermally sprayed under the following conditions by using the abovementioned device on a face side of a trial laminated source paper 70 ([face] polyethylene 18 µm/source paper (300 g/m²)/[back] polyethylene 18 µm).
Powdered resin: low-density polyethylene powder with an average particle diameter of 120 µm
Amount of powder sprayed in one cycle: about 20 mg
Distance between the thermal spray nozzle and thermal spray target surface: 6 mm
Temperature of hot air at the nozzle outlet: 320°C
Preheating: delay before spraying 1.5 s

As a result, a raised resin portion 71 with a coating film thickness of 1.1 mm in the central portion, such as depicted in Fig. 5, could be satisfactorily formed, without the occurrence of the stringing phenomenon.

### Example 2: (Formation of raised resin portion on step portion)

A resin was thermally sprayed under the following conditions with the abovementioned device close to the step portion 4 of the opening curled portion 3 of the cup-shaped container 1.
Powdered resin: low-density polyethylene powder with an average particle diameter of 120 µm
Amount of powder sprayed in one cycle: about 25 mg
Distance between the thermal spray nozzle and thermal spray target surface: 10 mm
Temperature of hot air at the nozzle outlet: 320°C
Preheating: delay before spraying 1.5 s
Note: reheating was performed with a hot air generator.

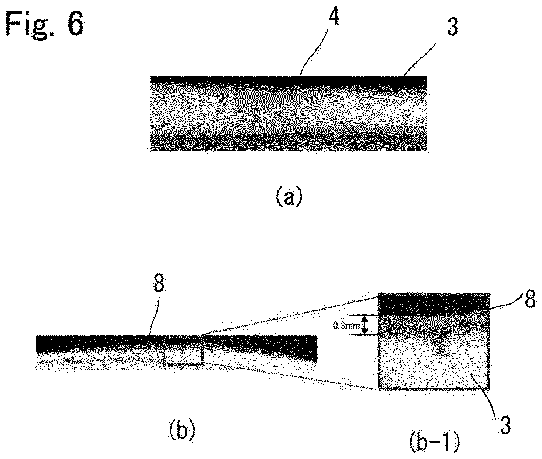

As a result, a raised resin portion 8 with a coating film thickness of 0.3 mm could be satisfactorily formed to cover the step portion 4, as depicted in (b-1) in Fig. 6.

By forming the raised resin portion on the step portion in the above-described manner, it was possible to improve weldability with the lid even without melting the resin or collapsing the curled portion when the lid was heat-sealed, the sealing performance could be improved, and discomfort during direct drinking could be eliminated. Also, in the case of an overcap, since the step portion in the curled portion is eliminated, leakage therefrom can be prevented.

### Example 3: (Resin coating for local improvement of the object)

A resin was coated under the following conditions over the entire periphery of the inner peripheral surface of the annular leg portion of the cup-shaped container.
Tested container: cup-shaped container (material: the same in the body and bottom)
Material layer configuration:
   Body: (inside) polyethylene (20 µm)//slush slush paper (250 g/m²)
   Bottom: (inside) polyethylene (40 µm)// paper 250 g/m²//polyethylene (15 µm)
Full amount of contents: 565 ml, height of annular let portion: 10 mm
Thermal spraying conditions:
   Powdered resin: powdered polyethylene with an average particle diameter of 120 µm
   Scorching-preventing substance (material with a low dielectric constant): calcium carbonate
Resin coating film: width about 10 mm along the entire periphery of the inner periphery of the annular leg portion, coating thickness 1 mm or less

A resin coating layer including the scorching-preventing substance was formed in the above-described manner on the inner peripheral surface of the annular leg portion. The following test was performed to verify the occurrence of scorching in the cup-shaped container.
Container filling contents: water 330 ml
Output of microwave oven: 500 W
Heating time: 6 min

The abovementioned heating conditions correspond to the usual heating temperature which is optimum for eating the contents (noodle food).

Occurrence of scorching: in the container of the present example in which the coating layer was formed, the color of scorching which occurred at the bottom rim was lighter and the range thereof was narrower than in a comparative container which was not provided with the coating layer.

Embodiments and examples of the microwavable formed paper container of the present invention are explained hereinabove, but the present invention is not limited thereto. Thus, the formed paper container of the present invention is not limited to cup-shaped containers necessarily having an annular leg portion, and the present invention is also applicable to various structures of microwavable formed paper containers having a part where scorching tends to occur.

### INDUSTRIAL APPLICABILITY

With the present invention, a raised resin portion can be formed reliably and efficiently on a narrow local region in a formed paper container, problems associated with sealing performance of the formed paper container and the occurrence of scorching in heating in a microwave oven can be resolved with a simple configuration, applicability of the formed paper container to normal-temperature distribution can be improved with an inexpensive configuration, and a coating resin can be reliably thermally sprayed on a local region. Thus, the present invention has high industrial applicability.

## Claims

1. A formed paper article having an opening, wherein a raised resin portion is formed on a local portion by thermally spraying a coating material configured of a powder mainly composed of a synthetic resin.

2. The formed paper article according to claim 1, wherein the local portion is at least a bonding step portion of a peripheral edge of the opening of a cup-shaped formed paper article, and the step portion is buried by the raised resin portion.

3. The formed paper article according to claim 1, wherein the local portion is a bonding step portion of a body of the formed paper article, and a paper edge in the bonding portion is coated with the raised resin portion.

4. The formed paper article according to claim 1, wherein the formed paper article is a drawn article mainly composed of paper, the local portion is an entire periphery of an opening flange surface, and wrinkles on the opening flange surface are coated by the raised resin portion.

5. The formed paper article according to claim 1, wherein the raised resin portion is formed by thermally spraying a heat-adhesive resin powder and has an average coating thickness of 0.3 mm or less.

6. The formed paper article according to claim 1, wherein the formed paper article is a formed paper container adapted to heating in a microwave oven, wherein a resin coating layer including a scorching-preventing substance is formed on a local region of the formed paper container.

7. The formed paper article according to claim 6, wherein the resin coating layer is formed by thermally spraying a powder in which a scorching-preventing substance powder is mixed with a resin powder.

8. The formed paper article according to claim 7, wherein the scorching-preventing substance powder is an inorganic substance with a relative dielectric constant of 2 or less.

9. A coating method for coating a local region of an object with a coating material mainly composed of a synthetic resin, wherein the coating material is a powder mainly composed of a synthetic resin, and the powder is intermittently thermally sprayed on the local region.

10. The coating method according to claim 9, wherein in the thermal spraying, the powder is quantitatively discharged, pumped by a pressurized gas, merged with a heating gas, and intermittently thermally sprayed on the local region.

11. The coating method according to claim 10, wherein the heating gas is hot air, heats the synthetic resin powder close to a melting point, and partially melts the powder.

12. The coating method according to claim 9, wherein the local region to be coated in the object is preheated.

13. A coating device for coating a local region of an object with a coating material mainly composed of a synthetic resin, wherein the coating material is a powder, the coating device comprises a tank for supplying the powder, a thermal spray nozzle communicating with a lower end of the tank, and a quantitative discharge shutter device provided between a lower end opening of the tank and the thermal spray nozzle, and the powder is quantitatively discharged from the tank by the quantitative discharge shutter device, merged with a heating gas, and thermally sprayed from the thermal spray nozzle.

14. The coating device according to claim 13, wherein the quantitative discharge shutter device is composed of a rotating body provided across an outlet opening of the tank, a metering chamber facing the outlet opening of the tank is provided in the rotating body, a valve is provided that communicates with a gas supply port of the metering chamber and supplies a pressurized gas to the metering chamber, the rotating body can be rotated intermittently between a metering position and a thermal spraying position, at the metering position the powder is quantitatively metered facing the outlet opening of the tank, at the spraying position, the metering chamber faces the thermal spray nozzle, the pressurized gas is supplied from the valve to the metering chamber, and the powder is pumped into the thermal spray nozzle.
